# EUROPÄISCHE PATENTSCHRIFT

(11) **EP 0 361 175 B1**
(45) Veröffentlichungstag und Bekanntmachung des Hinweises auf die Patenterteilung: **26.05.1993**
(21) Anmeldenummer: 89116640.7
(22) Anmeldetag: 08.09.1989
(51) Int. Cl.: A47F 9/04, B62B 3/10

(54) **Kassenarbeitsplatz mit fahrbarer Packmulde**
Check-out working area with a shopping trolley
Place de travail de caisse avec panier roulant

(30) Priorität: 15.09.1988 DE 8811718 U; 11.11.1988 DE 8814136 U; 16.02.1989 DE 8901795 U
(43) Veröffentlichungstag der Anmeldung: 04.04.1990
(73) Patentinhaber: KARL GUTMANN KG, D-78089 Unterkirnach (DE)
(72) Erfinder: Gutmann, Karl, D-7731 Unterkirnach (DE)
(74) Vertreter: Neymeyer, Franz, Dipl.-Ing. (FH)

(56) Entgegenhaltungen:
- CH-A- 463 384
- US-A- 3 286 794
- US-A- 4 373 611

## Beschreibung

Die Erfindung betrifft einen Kassenarbeitsplatz mit fahrbarer Packmulde, insbesondere für Selbstbedienungsläden, Warenhäuser, Verbrauchermärkte und dgl., bestehend aus einem thekenartigen Kassentisch mit einer zu einem Registrierplatz führenden, aus einer Förderplatte und/oder einem Förderband bestehenden Transportbahn und aus einem fahrbaren Warenkorb, der die Grundform eines gleichschenkligen Trapezes und einen gegenüber der Horizontalen geneigten, mit seiner Querkante in Höhe der Transportbahn endenden Rutschboden aufweist und dessen ebenfalls trapezförmiges Fahrgestell mit einem vorderen und einem hinteren Lenkrollenpaar versehen ist, wobei das vordere Lenkrollenpaar eine kleinere Spurweite aufweist als das hintere Lenkrollenpaar und wobei der Warenkorb über eine an der Längsseite des Kassentisches entlang führende Fahrbahn auf die Warenabgabeseite des Kassentisches fahrbar und dort zur Wiederaufnahme von Waren stirnseitig anstellbar ist, wo er mit Haltemitteln gegen Wegschieben gehalten wird ist.

Es ist bereits ein derartiges Kassiersystem mit einem eine Transportbahn aufweisenden Kassentisch und mit einem Einkaufswagen mit Warenkorb bekannt (DE-PS 24 35 780), der einen gegenüber der Horizontalen geneigten Rutschboden aufweist und bei dem das hintere Rollenpaar eine größere Spurweite aufweist als das vordere Rollenpaar. Die vordere kürzere Querkante des Rutschbodens, die sich über dem schmäleren Teil des Fahrgestells mit dem Rollenpaar der kleineren Spurweite befindet, ist etwa in Höhe der Stirnseite des Kassentisches angeordnet und so an diese anstellbar, daß die registrierten waren von der Transportbahn des Kassentisches unmittelbar in den Warenkorb gelangen können.
Mindestens eines der vier Seitenteile des Warenkorbes ist vom Boden des Warenkorbes wegschwenkbar. Zur Übergabe der Ware aus dem Warenkorb auf die Transportbahn ist der Boden des Warenkorbes aus dem Innenbereich des Warenkorbes entfernbar, sodaß die Ware beim Herausziehen des Bodens auf die Transportbahn gesetzt wird. Am abgabeseitigen Ende der Transportbahn wird der entleerte Einkaufswagen mit dem wieder eingesetzten Korbboden zur Wiederaufnahme der inzwischen registrierten Waren aufgestellt, wo er gegen Wegrollen durch eine Magnetschiene gehalten wird.

Mit diesem Kassiersystem sollte eine Erleichterung für den Kunden wie auch für die Kassiererinnen dadurch erreicht werden, daß das gesamte Einkaufsgut mit einem Handgriff, d.h. auf einmal aus dem Warenkorb auf die Transportbahn des Kassentisches befördert werden kann. Dies ist aber nur dann möglich, wenn nicht mehr Waren im Warenkorb enthalten sind, als auf dem Boden des Warenkorbes Platz finden. Sobald Waren übereinanderliegend im Warenkorb mitgeführt werden, besteht die Gefahr, daß die Waren nach dem Herausnehmen des Bodens aus dem Warenkorb und Wegfahren des Wagens übereinanderfallen bzw. von der Transportbahn herunter fallen.
Außerdem ist das Wiedereinsetzen des herausgezogenen Warenkorbbodens in den Warenkorb umständlich und mühsam. Hinzu kommt, daß die registrierte Ware manuell von der Transportbahn abgehoben und in den Warenkorb am Ende der Transportbahn versetzt werden muß.
Auch das Festhalten des Warenkorbes bzw. des Einkaufswagens mittels einer Magnetschiene hat sich als unbrauchbar erwiesen, weil dabei zwischen Kassentisch und Warenkorb bei ausreichend großer Magnetkraft ein zu starke Reibung verursacht wird, die ein Verschieben des Einkaufswagen entlang der Stirnseite des Kassentisches erheblich erschwert. Aus diesen und anderen Gründen hat sich dieses Kassiersystem in der Praxis nicht durchsetzen können.

Es ist auch bereits ein Kassentisch für Selbstbedienungsläden mit einem Warentransportband bekannt (DE-GM 76 11 940) bei dem hinter der Abrechnungsstelle am Ende der Transportbahn ein Warenaufnahmebehälter angeordnet ist, der als gesondert fahrbarer Wagen ausgebildet oder aber als Warenzelle schwenkbar, drehbar, verschiebbar oder einhängbar mit dem Kassentisch verbunden sein kann. Zweck der Beweglichkeit des an die eine Seitenwand des Kassentisches angestellten Warenaufnahmebehälters ist es, diese Seitenwand des Kassentisches jederzeit leicht zugänglich zu machen, damit täglich vorzunehmende Einstellungs- und Wartungsarbeiten am Lesegerät, welches in den Kassentisch integriert ist, durchführen zu können. Als Einkaufswagen ist der Warenaufnahmebehälter auch in seiner als fahrbarer Wagen ausgebildeten Form nicht vorgesehen und auch nicht verwendbar. In seiner als Warenzelle ausgebildeten Form ist der Warenaufnahmebehälter so mit dem Kassentisch verbunden, daß er lediglich zur Freigabe der einen Seitenwand des Kassentisches verschoben oder verschwenkt werden kann. Zur Warenaufnahme ist er jedoch stets so mit dem Kassentisch verbunden, daß er nicht ohne weiteres von dieser Seitenwand wegbewegt werden kann, insbesondere nicht im gefüllten Zustand.

Der Erfindung liegt die Aufgabe zugrunde, einen Kassenarbeitsplatz mit fahrbarer Packmulde der eingangs genannten Art zu schaffen, bei dem die fahrbare Packmulde einerseits leicht und sicher an der Warenabgabeseite des Kassentisches stirnseitig in der zum Wiederbeladen richtigen Position angestellt und in dieser Wiederbeladeposition zugleich mit dem Kassentisch mechanisch gegen Wegrollen verbunden andererseits aber auch in Querrichtung wieder leicht weggefahren werden kann.

Gelöst wird diese Aufgabe nach der Erfindung dadurch, daß der fahrbare Warenkorb unterhalb der oberen Querkante seines in Höhe der Transportbahn endenden Rutschbodens zapfen- oder hakenförmige Führungselemente aufweist, die führend in eine an der warenabgabeseitigen Stirnseite des Kassentisches in Horizontallage quer verlaufend angeordnete Führungsbahn formschlüssig und in Querrichtung verschiebbar einführbar sind.

Dieser Kassenarbeitsplatz hat gegenüber den bisher bekannten Kassiersystemen erhebliche Vorteile. Vor allem ist sicher gestellt, daß der leere, am Kassentisch stehende Einkaufswagen so positioniert ist, daß die Waren einzeln wie bei einer feststehenden Packmulde mit einer schrägen Rutschfläche von der Transportbahn oder vom Förderband, wenn sich dieses über die ganze Kassentischlänge erstreckt, in seinen Warenkorb hineinschieben lassen und auf dessen Rutschboden von selbst vollends in den Warenkorb hineinrutschen. Außerdem ist sichergestellt, daß der zweite mit der registrierten Ware zu füllende Warenkorb während die Waren eingeladen werden, fest und unverrückbar mit dem Kassentisch verbunden ist und sich nur in Querrichtung verschieben läßt.

Um den Kunden bzw. die Kundin zu veranlassen, den Warenkorb in der richtigen Position am Kassentisch vorbeizuschieben, so daß am abgabeseitigen Ende des Kassentisches die zapfen- oder hakenförmigen Führungselemente mit der Führungsbahn in Eingriff gebracht werden können, ist die Ausbildung der Erfindung nach Anspruch 2 vorgesehen, die zugleich sicherstellt, daß auch Handgriffe an den Seitenwänden des Warenkorbes angebracht werden können, ohne daß die Gefahr besteht, daß sich der Kunde oder die Kundin am Kassentisch die Hand verklemmt, wenn sie den dem Kassentisch zugekehrten Handgriff umfaßt.

Durch die Ausgestaltung nach Anspruch 3 ergibt sich der Vorteil sehr einfacher und auch einfach handhabbarer Verankerungsmittel zwischen dem fahrbaren Warenkorb einerseits und der ausgabeseitigen Stirnseite des Kassentisches andererseits.

Durch die Ausgestaltung nach Anspruch 4 und den darin vorgesehenen Versatz des hinteren Lenkrollenpaares gegenüber der oberen Querkante, die zugleich die hintere Endkante des Warenkorbes bildet, ergibt sich eine gewissen Beinfreiheit, die zumindest weitgehend verhindert, daß man beim Schieben eines solchen Warenkorbes mit den Füßen gegen das Gestell bzw. die Lenkrollen stößt.

Die Ausgestaltungen nach Anspruch 5 und 6 sind zur sicheren Positionierung des fahrbaren Warenkorbs in der Führungsbahn zweckdienlich und vorteilhaft.
Durch die Ausgestaltung nach Anspruch 7 ist sichergestellt, daß die in der Regel trapezförmigen, also vorne und hinten ungleich breiten Warenkörbe sich in Parallellage zueinander befinden und die seitlichen Handgriffe nicht zusammenstoßen können, wenn beim Einschieben eines leeren Warenkorbes in die Führungsbahn ein gefüllter Warenkorb aus der Führungsbahn herausgeschoben wird.

Durch die Ausgestaltung nach Anspruch 8 ist sichergestellt, daß ein mit Waren gefüllter Warenkorb an der ausgabeseitigen Stirnseite des Kassentisches entlang dieser Stirnseite aus der Führungsbahn herausgeschoben werden kann, indem ein anderer leerer Warenkorb an seiner Stelle in die Führungsbahn geschoben wird.

Durch die Ausgestaltung nach den Ansprüchen 9 und 10 soll die Kundin oder der Kunde dazu angehalten werden, ihren entleerten Warenkorb an der ausgabeseitigen Stirnseite des Kassentisches in die Position zu bringen, in welcher er mit seinen Führungselementen in der Führungsbahn geführt ist und zum Füllen mit der Ware einer nachfolgenden Kundin richtig positioniert ist.

Eine weitere Verbesserung bezüglich der richtigien Positionierung des entleerten Warenkorbes an der Stirnseite des Kassentisches wird durch die Ausgestaltung nach Anspruch 11 erzielt, in dem durch sie eine zwangsläufige Führung der einen Lenkrolle des Warenkorbes in der Weise erfolgt, daß er dann, wenn diese Lenkrolle von der Leitschiene erfaßt ist, zwangsläufig in die richtige Position an der Stirnseite des Kassentisches geführt wird. Dabei ist sichergestellt, daß nur die eine Lenkrolle des hinteren Lenkrollenpaares von der Leitschiene erfaßt werden kann, während alle anderen Lenkrollen daran vorbei laufen können und zwar sowohl im Bereich der Kassentischlängsseite als auch im Bereich der Kassentischstirnseite. Damit diese Führung völlig störungsfrei erfolgen kann, ist die weitere Ausbildung nach Anspruch 12 vorgesehen.

Durch die Ausgestaltungen der Ansprüche 13 bis 16 ergeben sich weitere Vorteile für die Handhabung.

Anhand der Zeichnung wird im folgenden die Erfindung näher erläutert. Es zeigt:
- Fig. 1: einen Kassenarbeitsplatz in Seitenansicht;
- Fig. 2: den Kassenarbeitsplatz der Fig. 1 in Draufsicht;
- Fig. 3: die ausgabeseitige Stirnwand des Kassentisches in perspektivischer Ansicht;
- Fig. 4: einen als fahrbare Packmulde verwendbaren Warenkorb.
- Fig. 5: einen anderen fahrbaren Warenkorb in Seitenansicht;
- Fig. 6: den Warenkorb der Fig. 5 in Frontansicht;
- Fig. 7: den Warenkorb der Fig. 5 in Draufsicht;
- Fig. 8: den abgabeseitigen Endabschnitt eines anderen Kassentisches in Seitenansicht mit stirnseitig angestelltem Warenkorb;
- Fig. 9: eine Draufsicht von Fig. 8;
- Fig. 10: zwei im Abstand nebeneinander angeordnete Kassentische mit dazwischen stehendem Warenkorb in Draufsicht;

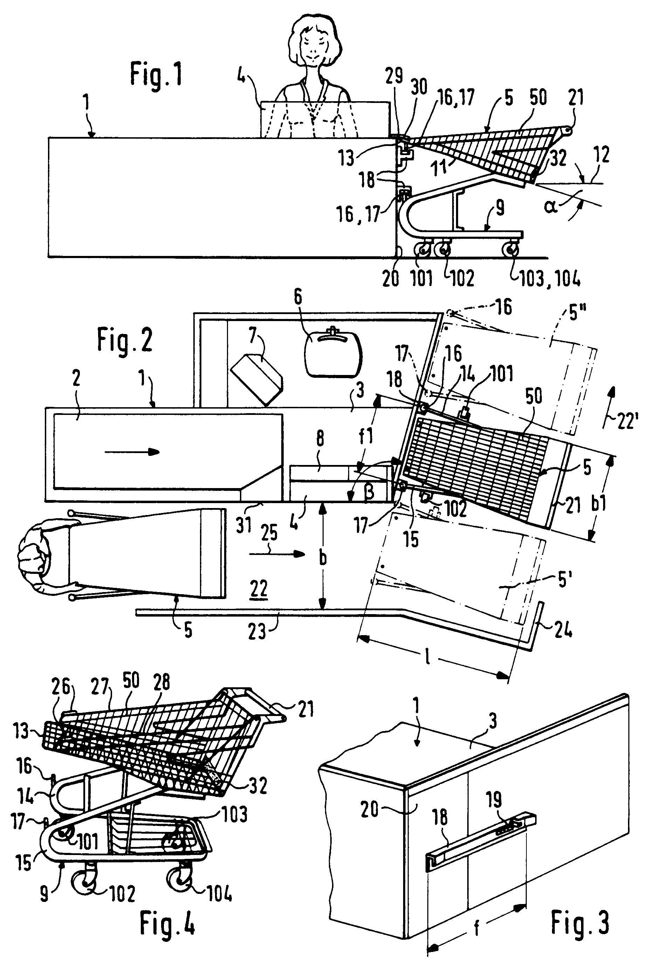

Der Kassenarbeitsplatz besteht aus einem Kassentisch 1, der eine längliche, thekenartige Form aufweist und mit einem Förderband 2 versehen ist. Dieses Förderband 2 endet an einer feststehenden in gleicher Hohe liegenden Tischplatte 3, auf welcher ein Registiergerät 4 aufgestellt ist und über welche die vom Förderband 2 herbeigeführte Ware in einen an der ausgabeseitigen Stirnseite angestellten fahrbaren Warenkorb 5 geschoben wird. In Förderrichtung hinter dem Registriergerät 4 kann ein zweites Förderband angeordnet sein, welches die Ware in den Warenkorb befördert. Das Förderband 2 und ggf. das zweite Förderband sowie die Tischplatte 3 bilden gemeinsam die Transportbahn des Kassentisches, über welche die verkauften Waren transportiert bzw. geschoben werden.
Auf der dem Registriergerät 4 gegenüberliegenden Seite des Kassentisches 1 befindet sich der Sitzplatz 6 für die Kassiererin, der mit einer Eingabetastatur 7 versehen ist. Auf der Tischplatte 3 befindet sich zudem eine elektronische Leseeinrichtung 8, die in der Lage ist, von der vorbeigeführten Ware Daten zu lesen und in das Registriergerät 4 einzugeben.
Der Warenkorb 5 weist einen aus Drahtgitterteilen bestehenden Korbteil 50 auf, der in Seitenansicht keilförmig ausgebildet ist und der in Draufsicht die Form eines gleichschenkligen Trapezes aufweist. Der Warenkorb 5 ist mit einem Fahrgestell 9 versehen, das mit einem vorderen Lenkrollenpaar 103/104 und einem hinteren Lenkrollenpaar 101/102 ausgerüstet ist. Das vordere Lenkrollenpaar 103/104 weist eine kleinere Spurweite auf als das hintere Lenkrollenpaar 101/102. Der Korbteil 50 ist mit einem Rutschboden 11 versehen, der über seine ganze Länge gegenüber der Horizontalen 12 um einen Winkel α von etwa 20° geneigt ist und der an einer schmalseitigen Querkante 13 endet, die sich in Höhe der Tischplatte 3 befindet. Unterhalb dieser Querkante 13 sind entweder unmittelbar am Rutschboden 11 oder an den beiden Gestellholmen 14 und 15 des Fahrgestells 9 vertikale, zapfenförmige Führungselemente 16 und 17 angeordnet, welche mit Führungsrollen oder Führungshülsen versehen sein können und welche jeweils gemeinsam in eine Führungsbahn 18 einführbar sind, die von einer Horizontallage an der ausgabeseitigen Stirnseite 20 des Kassentisches 1 angeordnete Z-förmig oder U-förmig profilierten Führungsschiene gebildet ist. In Fig. 1 sind zwei solche Führungsbahnen 18 übereinander angeordnet. In der Praxis ist aber nur eine dieser beiden Winkelschienen vorgesehen, je nach dem, ob die Führungselemente 16 und 17 oben oder unten am Warenkorb 5 angeordnet sind. Die Länge 1 dieser Führungsbahn 18 ist etwas größer als der Abstand f1, den die beiden Führungselemente 16 und 17 voneinander haben, so daß beide Führungselemente 16 und 17 gleichzeitig in der Führungsbahn 18 geführt werden können, um den Warenkorb 5 in der in den Fig. 1 und 2 dargestellten Position gegen Wegrollen zu fixieren, in welcher die über den Kassentisch 1 geführten Waren wieder in einen Warenkorb 5 eingeschoben werden und auf dem Rutschboden 11 selbsttätig nach unten gegen eine Polsterleiste 32 rutschen können. Die Polsterleiste 32 dient zum sanften Abbremsen bzw. Stoppen der heruntergleitenden Ware. Sie ist an der nach oben schwenkbaren Stirnwand des Warenkorbs angeordnet.
Um diese Position des Warenkorbes 5 an der ausgabeseitigen Stirnseite 20 des Kassentisches 1 leichter auffinden zu können, ist am auslaufseitigen Ende der die Führungsbahn 18 bildenden Führungsschiene eine federnde Rastvorrichtung 19 vorgesehen. Statt dessen könnte auch eine von der Kassiererin betätigbare Arretiervorichtung vorgesehen sein, durch welche der gefüllte Warenkorb 5 erst freigegeben wird, wenn die Kundin bezahlt hat.

Wie am besten aus der Fig. 2 ersichtlich ist, ist der Korbteil 50 auf der Seite der Querkante 13 wesentlich schmäler als auf der gegenüberliegenden Seite, wo sich wie bei bekannten Einkaufswagen in Form einer Querstange der übliche Handgriff 21 zum Schieben des Warenkorbs 5 befinden kann. Hingegen ist aber das Fahrgestell 9 auf der Seite der kürzeren Querkante 13 breiter als auf der gegenüberliegenden Seite, wo sich der Handgriff 21 befindet. Dadurch ist sichergestellt, daß zwei nebeneinanderstehende und sich seitlich berührende Warenkörbe 5 zumindest annähernd in Parallellage zueinander befinden, so daß es leicht möglich ist, einen sich in Einfüllposition an der Stirnseite 20 des Kassentisches 1 befindenden, mit der Führungsbahn 18 in Eingriff stehenden Warenkorb 5 durch einen anderen leeren Warenkorb 5′ in die Position 5˝ zu schieben, indem der leere Warenkorb 5′ in Richtung des Pfeiles 22′ mit seinen Führungselementen 16 und 17 in die Führungsbahn 18 geschoben wird.

Dabei ist es aber erforderlich, den Warenkorb 5 so in Richtung des Pfeiles 25 am Kassentisch 1 vorbeizufahren, daß sich die Führungselemente 16, 17 und die Querkante 13 des Rutschbodens 11, in Fahrrichtung gesehen, hinten befinden.
Damit die Kundin den entleerten Warenkorb 5, wenn sie ihn mit dem Handgriff 21 voraus am Kassentisch 1 vorbeiführt, auch bequem halten und gut lenken kann, sind auf der Seite der Querkante 13 die beiden Seitenteile 27 und 28 des Korbteils 50 jeweils mit zusätzlichen Handgriffen 26 versehen.

Zugleich ist durch das auf der schmalen Korbteilseite breitere Fahrgestell 9 auch sichergestellt, daß die Hände der den Warenkorb an den Handgriffen 26 fassenden Kundin gegen seitliches Anstoßen geschützt sind.
Damit die beiden an der breiteren Seite des Fahrgestells 9 befindenden Lenkrollen 101 und 102 zweier eng nebeneinander stehender Warenkörbe 5 und 5′ oder 5˝ sich nicht behindern, sind diese beiden Lenkrollen 101 und 102, wie am besten aus den Fig. 2 und 4 ersichtlich ist, in Schieberichtung bzw. Längsrichtung des Warenkorbes 5 so weit gegeneinander versetzt, daß sie sich nicht berühren können, wenn die Führungselemente 16, 17 des einen Warenkorbs 5 mit denen des anderen Warenkorbs 5′ bzw. 5˝ in einer fluchtenden Reihe liegen.

Wenn die Kundin mit einem gefüllten Warenkorb 5 am Kassentisch 1 angekommen ist, so entnimmt sie ihre Waren aus dem Warenkorb und stellt diese zunächst auf das Förderband 2. Vom Förderband 2 werden dann die Waren zur Leseeinrichtung 8 bzw. zur Tischplatte 3 transportiert bzw. von der Kassiererin, die auf dem Sitzplatz 6 sitzt, vom Förderband entnommen, über die Leseeinrichtung 8 bzw. über die Tischplatte 3 in den an der Stirnfläche 20 stehenden leeren Warenkorb 5 geschoben, wo sie über den Rutschboden 11 nach unten rutschen. Der Warenkorb 5 hat dabei die Funktion einer der sonst üblichen Packmulden. Im Unterschied zu den bekannten, feststehenden Packmulden braucht aber die Kundin ihre Ware an dieser Stelle dem Warenkorb 5 nicht wieder zu entnehmen, sondern sie kann den Warenkorb 5 dann mit sämtlichen Waren aus der Verankerung mit dem Kassentisch herausschieben an einen Ort, wo sie die Ware in ihre eigenen Behältnisse umfüllen kann. Dieses Herausschieben des nun mit ihrer Ware gefüllten Warenkorbes 5 aus der Verankerung mit der Führungsbahn 18 des Kassentisches 1 geschieht in der Weise, daß die Kundin ihren zuvor entleerten Warenkorb 5 in die Position 5′ bringt und dann diesen leeren Warenkorb 5 aus der Position 5′ in Richtung des Pfeiles 22', also in Querrichtung, so verschiebt, daß die Führungselemente 16 und 17 in Eingriff gelangen mit der Führungsbahn 18 und daß dabei der gefüllte Warenkorb 5 gleichzeitig aus der Führungsbahn 18 herausgeschoben wird in die Position 5˝. Wenn dies geschehen ist, kann die Kundin dann den gefüllten Warenkorb 5 aus der Position 5˝ entfernen und an den genannten anderen Umfüllort fahren, wo sie den weiteren Betrieb am Kassentisch 1 nicht stört. Ihren leeren Warenkorb 5, den sie zuvor zum Einsammeln der Ware benutzt hat, läßt sie an der Stirnseite 20 des Kassentisches 1 in Einfüllposition stehen.

Damit die Kundin ihren entleerten Warenkorb 5 tatsächlich auch an die Stelle des mit ihren Waren gefüllten Warenkorbes 5 schiebt, ist in Fig. 2 die Fahrbahn 22 entlang des Kassentisches 1 mit einer geländerartigen Begrenzung 23 versehen, die etwa um die Länge l eines Warenkorbs 5 länger ist als der Kassentisch 1 und die an ihrem Ende einen Quersteg 24 aufweist. Dieser Quersteg 24 verhindert ein Durchschieben des leeren Einkaufswagens in Richtung des Pfeiles 25. Durch die Begrenzung 23 mit dem Quersteg 24 ist auch sichergestellt, daß die Kundin nicht zu dem mit ihren Waren gefüllten Warenkorb 5 gelangt, ohne daß sie ihren entleerten Warenkorb 5 in die Position bringt, in welcher er mit den Waren der nächstfolgenden Kundin in der vorbeschriebenen Weise gefüllt werden kann.

Wie aus Fig. 2 ersichtlich ist, verläuft die ausgabeseitige Stirnwand 20 des Kassentisches 1 nicht rechtwinklig zu seiner Längsseite 31, sondern unter einem Winkel β von etwa 100° bis 115° schräg dazu. Dadurch wird das Führen der Warenkörbe 5 in diesem Bereich erleichtert.

Um einen evtl. zwischen der Querkante 13 des Rutschbodens 11 des Warenkorbs 5 und der Tischplatte 3 entstehenden Spalt 29 zu überbrücken, ist am stirnseitigen Ende der Tischplatte 3 eine dünne nach außen vorstehende Platte 30 (Fig. 1) vorgesehen, die sich über die gesamte Breite des Korbteil 50 erstrecken kann. Damit die Querkante 13 des Rutschbodens 11 des Warenkorbs 5 ungehindert unter diese Platte 30 geschoben werden kann, sind die beiden Seitenteile 27 und 28 des Warenkorbs 5 gegenüber der Querkante 13 um einige Zentimeter zurückversetzt, wie das am besten aus Fig. 4 ersichtlich ist.

Um die Vorteile der Erfindung beim Umladen der Ware vom einen Warenkorb 5 über die Transportbahn in den anderen Warenkorb an der abgabeseitigen Stirnseite 20 des Kassentisches 1 wahrnehmen zu können ist es nicht erforderlich, daß das Fahrgestell 9 die in der Zeichnung dargestellte Form hat. Die Form des Fahrgestells kann vielmehr unter Berücksichtigung zusätzlicher Gesichtspunkte z.B. solcher der Standfestigkeit und der Zusammenschichtbarkeit auf kleinem Raum, gestaltet werden.

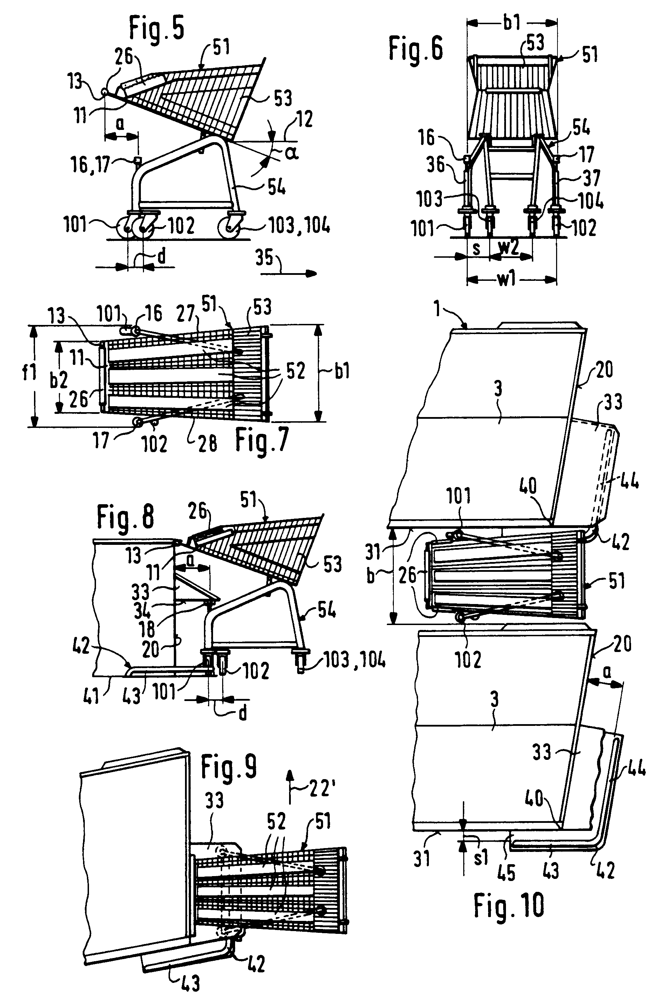

In den Fig. 5 bis 10 ist ein anderer Warenkorb 51 dargestellt, der ebenfalls aus einem in Seitenansicht im wesentlichen keilförmigen und in Draufsicht gleichschenklig-trapezförmigen Korbteil 53 und aus einem Fahrgestell 54 besteht. Das Fahrgestell 54 weist zwei Lenkrollenpaare 101/102 sowie 103/104 mit unterschiedlichen Spurweiten **w**1, **w**2 aufweist. Im Unterschied zum Korbteil 50 des Warenkorbes 5 weist der Korbteil 53 des Warenkorbes 51 auf seiner breiteren Stirnseite keinen Handgriff auf. An der Schmalseite sind lediglich an den beiden Seitenteilen 27 und 28 sowie an der Querkante 13 des schrägen Rutschbodens 11 Handgriffe 26 angeordnet. Dadurch wird die Kundin veranlaßt, den Warenkorb 53 in der richtigen Schieberichtung des Pfeiles 35 an den Kassentisch 1 heranzufahren bzw. am Kassentisch 1 entlang zu fahren. Die übrige Gestaltung des Korbteiles 53 entspricht zumindest annähernd derjenigen des Korbteiles 50 beim Ausführungsbeispiel der Fig. 1 bis 4. Der Rutschboden des Korbteils 53 ist zusätzlich mit drei längsverlaufenden Rutschblechstreifen 52 versehen.

Eine weitere Änderung gegenüber dem Warenkorb 5 besteht beim Warenkorb 51 darin, daß das Fahrgestell 54 in Schieberichtung kürzer gestaltet ist, als der Korbteil 53 und daß das hintere Lenkrollenpaar 102/102 um einen Abstand a, der etwa 15 - 30 cm betragen kann, gegenüber der oberen Querkante 13 des Korbteiles 53 nach vorne versetzt ist. Dadurch läßt sich der Warenkorb 51 leichter schieben, weil die Gefahr, mit den Füßen am Fahrgestell 54 bzw. an den Lenkrollen 101, 102 anzustoßen, wesentlich geringer ist.

Wie insbesondere aus Fig. 5 ersichtlich ist, sind in diesem Falle auch die zapfenförmigen Führungselemente 16 und 17, die auf den Gestellholmen 36 und 37 des Fahrgestells 54 nach oben ragend befestigt sind, ebenfalls um den Abstand a gegenüber der oberen Querkante 13 des Rutschbodens 11 nach vorne versetzt.

Wie die Fig. 8 zeigt ist, ist dementsprechend die aus einer U-förmig profilierten Führungsschiene bestehende Führungsbahn 18 im Abstand a von der Stirnseite 20 des Kassentisches 1 an der Unterseite 34 eines Vorsprunges 33 angeordnet, so daß sich auch der Warenkorb 51 mittels seiner beiden Führungselemente 16 und 17 und der Führungsbahn 18 am Kassentisch 1 stirnseitig so verankern und gegen Wegrollen sichern läßt, daß die obere Querkante 13 des Rutschbodens 11 an der stirnseitigen oberen Endkante des Kassentisches anliegt, wie das in den Fig. 8 und 9 dargestellt ist.

Ein weiterer Unterschied zum Ausführungsbeispiel der Fig. 1 bis 4 besteht darin, daß an der von der fahrbahnseitigen Längsseite 31 und der ausgabeseitigen Stirnseite 20 des Kassentisches gebildeten Ecke 40 auf dem Fahrbahnboden 41 eine um diese Ecke 40 herum führende, winkelförmige Leitschiene 42 mit zwei Leitschenkeln 43 und 44 angeordnet ist. Der Leitschenkel 43 verläuft parallel zur Längsseite 31, und der Leitschenkel 44 verläuft parallel zur Stirnseite 20. Diese Leitschiene hat die Aufgabe, die eine Lenkrolle 101 des hinteren Lenkrollenpaares 101/102 zu erfassen und um die Ecke 40 herumzuführen. Um dies störungsfrei zu ermöglichen, ist die Lenkrolle 101 des hinteren, die größere Spurweite w1 aufweisenden Lenkrollenpaares 101/102, die sich beim Durchfahren der Fahrbahn 22 auf der Kassentischseite befindet, um das Maß d, d.h. um wenigstens die Dicke des entlang der Stirnseite 20 verlaufenden Leitschenkels 44, gegenüber der anderen Lenkrolle 102 dieses Lenkrollenpaares nach hinten versetzt (siehe Fig. 5). Außerdem ist die kassentischseitige Lenkrolle 103 des vorderen Lenkrollenpaaares 103/104 gegenüber der kassentischseitigen Lenkrolle 101 des hinteren Lenkrollenpaares 101/102 um ein Maß s nach innen versetzt, welches größer ist als der seitliche Abstand s1, den der Leitschenkel 43 von der Längsseite 31 des Kassentisches hat. Der andere Leitschenkel 44, der parallel zur Stirnseite 20 verläuft, hat von dieser den Abstand a, um welchen die Lenkrolle 101 gegenüber der oberen Querkante 13 des Rutschbodens 11 nach vorne versetzt ist.

Durch diese Anordnung der Leitschenkel 43 und 44 der Leitschiene 41 und der Lenkrollen 101, 102 und 103 läßt sich der Warenkorb 51 auf einfache Weise zwangsgeführt um die Ecke 40 herumschieben und zwar so, daß dabei die Führungselemente 16, 17 des Fahrgestells 54 zwangsläufig mit der Führungsbahn 18 in Eingriff gelangen. Wie aus den Fig. 7, 9 und 10 ersichtlich ist, ist auch bei dieser Ausführungsform des Warenkorbes 51 die nach hinten versetzte Lenkrolle 101 außerhalb der Grundfläche des Korbteils 53 angeordnet, sodaß bei einer geraden Längswand des Kassentisches sichergestellt ist, daß die Kundin, welche den Warenkorb an den seitlichen Handgriff 26 führt, mit der linken Hand nicht an dem Kassentisch anstoßen kann, weil die darunter angeordnete Lenkrolle 101 für den nötigen Abstand von der Kassentischlängsseite 31 sorgt.

Während in der Fig. 2 die Fahrbahn 22 auf der einen Seite durch den Kassentisch 1 und auf der anderen Seite durch die geländerartige Begrenzung 23 begrenzt ist, wird die Fahrbahn 22 beim Ausführungsbeispiel der Fig. 10 durch zwei nebeneinanderstehende Kassentische 1 begrenzt, die einen Abstand b voneinander aufweisen, der etwas größer ist, als die größte Breite b1 des Warenkorbes 51.

Es ist noch zu erwähnen, daß die Leitschiene 42 im gezeigten Ausführungsbeispiel auf einem ebenfalls winkelförmigen Bodenblech 45 befestigt ist, das seinerseits am Kassentisch befestigt sein kann. Die Handhabung und das Umladen der Ware und das anschließende Anstellen des Warenkorbes 51 an die Stirnseite des Kassentisches 1 erfolgt in der anhand der Fig. 1 bis 4 beschriebenen Weise, allerdings mit dem Vorteil, daß hierbei eine zwangsläufige Führung des Warenkorbes 51 im Bereich der Ecke 40 und auch im Bereich des Führungsbahn 18 durch eine Zwangsführung des Warenkorbes 51 gegeben ist.

## Patentansprüche

1. Kassenarbeitsplatz mit fahrbarer Packmulde, insbesondere für Selbstbedienungsläden, Warenhäuser, Verbrauchermärkte und dgl., bestehend aus einem thekenartigen Kassentisch (1) mit einer zu einem Registrierplatz führenden, aus einer Förderplatte und/oder einem Förderband (2) bestehenden Transportbahn und aus einem fahrbaren Warenkorb (5), der die Grundform eines gleichschenkligen Trapezes und einen gegenüber der Horizontalen geneigten, mit seiner Querkante (13) in Hohe der der Transportbahn (2,3) endenden Rutschboden (11) aufweist und dessen ebenfalls trapezförmiges Fahrgestell (9) mit einem vorderen und einem hinteren Lenkrollenpaar versehen ist, wobei das vordere Lenkrollenpaar (103,104) eine kleinere Spurweite aufweist als das hintere Lenkrollenpaar (101,102) und wobei der Warenkorb (5) über eine an der Längsseite des Kassentisches entlang führende Fahrbahn auf die Warenabgabeseite des Kassentisches fahrbar und dort zur Wiederaufnahme von Waren stirnseitig anstellbar ist, wo er mit Haltemitteln gegen Wegschieben gehalten wird ist,
**dadurch gekennzeichnet,**
daß der fahrbare Warenkorb (5) unterhalb der oberen Querkante (13) seines in Höhe der Transportbahn (2,3) endenden Rutschbodens (11) zapfen- oder hakenförmige Führungselemente (16, 17,) aufweist, die führend in eine an der warenabgabeseitigen Stirnseite (20) des Kassentisches (1) in Horizontallage quer verlaufend angeordnete Führungsbahn (18) formschlüssig und in Querrichtung verschiebbar einführbar sind.

2. Kassenarbeitsplatz nach Anspruch 1, dadurch gekennzeichnet, daß der Warenkorb (5) auf der Seite der oberen Querkante (13) seines Rutschbodens (11) seine kleinere Breite aufweist und nur auf dieser Seite mit einem oder mehreren Handgriffen versehen ist.

3. Kassenarbeitsplatz nach Anspruch 1 oder 2, dadurch gekennzeichnet, daß die Führungselemente (16, 17) des Warenkorbs (5) aus zwei vertikalen mit Führungsrollen oder Führungshülsen versehenen Zapfen bestehen und daß die Führungsbahn (18) von einer Z-förmig oder U-förmig profilierten Führungsschiene gebildet ist, die in Höhe der Führungselemente (16, 17) an der Stirnwand (20) des Kassentisches (1) angeordnet ist.

4. Kassenarbeitsplatz nach einem der Ansprüche 1, oder 3, dadurch gekennzeichnet, daß die Führungsbahn (18) an der der Unterseite (34) eines an der Stirnseite (20) des Kassentisches (1) befestigten Vorsprungs (33) in etwa 15 cm bis 30 cm großen Abstand (a) von der Stirnseite (20) angeordnet ist und daß am Warenkorb (51) sowohl die Führungselemente (16, 17) als auch die sich unmittelbar darunter befindenden hinteren Lenkrollen (101, 102) um diesen Abstand (a) gegenüber der oberen Querkante (13) des Rutschbodens (11) in Schieberichtung (Pfeil 35) nach vorne versetzt sind.

5. Kassenarbeitsplatz nach einem der Ansprüche 1 bis 4, dadurch gekennzeichnet, daß die Länge (f) der Führungsbahn (18) wenigstens so groß ist wie der Abstand (f1) zwischen den beiden Führungselementen (16, 17).

6. Kassenarbeitsplatz nach Anspruch 5, dadurch gekennzeichnet, daß die Führungsbahn (18) am ausfahrseitigen Ende mit einer federbelasteten Rastvorrichtung (19) oder mit einer lösbaren Arretiervorrichtung zur Positionierung des Warenkorbs (5) versehen ist.

7. Kassenarbeitsplatz nach einem der Ansprüche 1 bis 6, dadurch gekennzeichnet, daß das Fahrgestell (9) des Warenkorbs (5) auf der mit den Führungselementen (16, 17) versehenen schmäleren Seite des Warenkorbs 5 eine Breite (f1) aufweist, die zumindest annähernd der größten Breite (b1) des Warenkorbs (5) auf der gegenüberliegenden Seite entspricht.

8. Kassenarbeitsplatz nach einem der Ansprüche 1 bis 7, dadurch gekennzeichnet, daß die Lenkrollen (101, 102) des hinteren Lenkrollenpaares (101, 102) in Schieberichtung (Pfeil 35) so weit zueinander versetzt sind, daß die linke Lenkrolle (101) eines Warenkorbs (5) mit der rechten Lenkrolle (10) eines unmittelbar fluchtend daneben stehenden Warenkorbs (5′) bei Querfahrt nicht in Berührung kommen kann.

9. Kassenarbeitsplatz nach einem der Ansprüche 1 bis 8, dadurch gekennzeichnet, daß die entlang des Kassentisches (1) verlaufende Fahrbahn (22) entweder durch einen zweiten Kassentisch (1) oder durch eine geländerartige Begrenzung (23) in ihrer Breite auf ein Maß (**b**) begrenzt ist, welches etwas größer ist als die maximale Warenkorbbreite (**b1**).

10. Kassenarbeitsplatz nach Anspruch 9, dadurch gekennzeichnet, daß die geländerartige Begrenzung (23) der Fahrbahn (22) um mehr als eine Warenkorblänge (**l**) länger ist als der Kassentisch (1) und am Ende einen das Durchschieben des Warenkorbs (5) verhindernden Quersteg (24) aufweist.

11. Kassenarbeitsplatz nach einem der Ansprüche 8 bis 10, dadurch gekennzeichnet, daß an der von der fahrbahnseitigen Längsseite (31) und der ausgabeseitigen Stirnseite (20) gebildeten Ecke (40) des Kassentisches (1) auf dem Fahrbahnboden (41) eine um diese Ecke (40) herumführende, winkelförmige Leitschiene (42) mit zwei Leitschenkeln (43, 44) angeordnet ist,
- daß die Lenkrolle (101) des hinteren, die größere Spurweite (**W**1) aufweisenden Lenkrollenpaars (101, 102), welche sich beim Durchfahren der Fahrbahn (22) auf der Kassentischseite befindet, um wenigstens die Dicke des entlang der Stirnseite (20) verlaufenden Leitschenkels (44) gegenüber der anderen Lenkrolle (102) dieses Lenkrollenpaars (101, 102) nach hinten versetzt ist und
- daß die kassentischseitige Lenkrolle (103) des vorderen Lenkrollenpaars (103, 104) gegenüber der nach hinten versetzten Lenkrolle (101) des hinteren Lenkrollenpaars um ein Maß (**s**) nach innen vesetzt ist, welches größer ist als der seitliche Abstand (**S**1) des einen Leitschenkels (43) von der Längsseite (31) des Kassentisches (1).

12. Kassenarbeitsplatz nach Anspruch 11, dadurch gekennzeichnet, daß wenigstens die nach hinten versetzte Lenkrolle (101) des hinteren Lenkrollenpaars (101, 102) seitlich außerhalb der Warenkorbfläche angeordnet ist und daß die kassentischseitige Lenkrolle (103) des vorderen Lenkrollenpaars (103, 104) gegenüber der äußersten seitlichen Warenkorbbegrenzung um wenigstens das Maß (**s**) nach innen versetzt ist.

13. Kassenarbeitsplatz nach Anspruch 1, dadurch gekennzeichnet, daß die abgabeseitige Stirnseite (20) des Kassentisches (1) zu seiner Längsseite (31) unter einem Winkel (β) von etwa 100° bis 115° schräg verläuft.

14. Kassenarbeitsplatz nach Anspruch 1, dadurch gekennzeichnet, daß der Fördertisch (3) an seiner abgabeseitigen Stirnseite mit einer nach außen vorspringenden Platte (30) versehen ist und daß die beiden Seitenteile (27, 28) des Warenkorbs (5) gegenüber der Querkante (13) um das vorspringende Maß dieser Platte (30) zurückversetzt enden.

15. Kassenarbeitsplatz nach Anspruch 1, dadurch gekennzeichnet, daß am unteren Ende des Rutschbodens (11) an der der Querkante (13) gegenüberliegenden Innenseite eine Polsterleiste (32) aus weichem Material angeordnet ist.

16. Kassenarbeitsplatz nach Anspruch 1, dadurch gekennzeichnet, daß der Rutschboden (11) des Warenkorbs (51) mit einem oder mehreren Rutschblechstreifen (52) versehen ist.

## Claims

1. Cash desk station with movable packing trough, especially for self-service shops, warehouses, consumer markets and the like, consisting of a counter-like cash desk (1) having a conveying path consisting of a conveyor plate and/or a conveyor belt (2) and leading to a register position, and of a mobile goods basket (5), which has the basic shape of an equal-sided trapezium and a chute bottom (11), inclined to the horizontal and terminating with its transverse edge (13) at the level of the conveying path (2, 3), and the likwise trapezium-shaped chassis (9) of which is provided with a front and a rear pair of castor wheels, wherein the front pair of castors (103, 104) has a smaller wheel base than the rear pair of castors (101, 102), and wherein the goods basket (5) can be traversed along a track leading along the longitudinal side of the cash desk to the goods discharge side of the cash desk and can be fitted there at the end for the purpose of receiving the goods again, where it is held from sliding away by holding means, characterized in that the traversable goods basket (5) possesses, below the upper transverse edge (13) of its chute bottom (11) terminating at the level of the conveying path (2, 3), pin-shaped or hook-shaped guide elements (16, 17), which can be introduced form-fittingly and transversely slidably into a guide track (18) mounted to extend transversely in a horizontal position at the goods discharge end (20) of the cash desk (1).

2. Cash desk station according to Claim 1, characterized in that the goods basket (5) has its smaller width on the side of the upper transverse edge (13) of its chute bottom (11) and is provided only at this side with one or more handles.

3. Cash desk station according to Claim 1 or 2, characterized in that the guide elements (16, 17) of the goods basket (5) consist of two vertical pins provided with guide rollers or guide sleeves and that the guide track (18) is formed of a Z-section or U-section guide rail, which is disposed at the level of the guide elements (16, 17) on the end wall (20) of the cash desk (1).

4. Cash desk station according to one of Claims 1 or 3, characterized in that the guide track (18) is mounted on the lower side (34) of a projection (33) fixed to the end face (20) of the cash desk (1), at a distance (a) of approximately 15 cm to 30 cm from the end face (20), and that on the goods basket (51) both the guide elements (16, 17) and also the rear castors (101, 102) situated immediately beneath them are offset by this distance (a) from the upper transverse edge (13) of the chute bottom (11) in the forward direction of pushing (arrow 35).

5. Cash desk station according to one of Claims 1 to 4, characterized in that the length (f) of the guide track (18) is at least as large as the distance (f1) between the two guide elements (16, 17).

6. Cash desk station according to Claim 5, characterized in that the guide track (18) is provided, at the exit end, with a spring-loaded catch device (19) or with a releasable locking device for positioning the goods basket (5).

7. Cash desk station according to one of Claims 1 to 6, characterized in that the chassis (9) of the goods basket (5) has, at the narrower end of the goods basket (5) equipped with the guide elements (16, 17), a width (f1) which is at least approximately equal to the largest width (b1) of the goods basket (5) at the opposite end.

8. Cash desk station according to one of Claims 1 to 7, characterized in that the castors (101, 102) of the rear castor pair (101, 102) are staggered sufficiently far from each other in the direction of pushing (arrow 35) that the left castor (101) of a basket (5) cannot come into contact with the right castor (10) of a goods basket (5') standing immediately in line and alongside, if moved transversely.

9. Cash desk station according to one of Claims 1 to 8, characterized in that the track (22) extending along the cash desk (1) is bounded either by a second cash desk (1) or by a balustrade-type boundary (23) limiting its width to a dimension (b), which is somewhat larger than the maximum width of goods basket (b1).

10. Cash desk station according to Claim 9, characterized in that the balustrade-type boundary (23) of the track (22) exceeds by more than one goods basket length (l) the length of the cash desk (1) and possesses, at the end, a transverse member (24) preventing the goods basket (5) from being pushed through.

11. Cash desk station according to one of Claims 8 to 10, characterized in that, at the corner (40) of the cash desk (1) formed by the longitudinal side (31) nearest the track and the end face (20) at the discharge end, an angle-shaped guide rail (42) comprising two guide branches (43, 44), leading around this corner (40), is mounted on the track floor (41),
- that the castor (101) of the rear castor pair (101, 102) having the larger wheel base (W1), which is on the cash desk side when travelling along the track (22), is offset to the rear compared with the other castor (102) of this castor pair (101, 102) by at least the thickness of the guide rail branch (44) extending along the end face (20), and
- that the castor (103) of the front castor pair (103, 104) on the cash desk side is offset inwards relative to the rearwardly offset castor (101) of the rear castor pair by a dimension (s) which is greater than the lateral distance (S1) of the one guide rail branch (43) from the longitudinal side (31) of the cash desk (1).

12. Cash desk station according to Claim 11, characterized in that at least the rearwardly offset castor (101) of the rear castor pair (101, 102) is disposed laterally outside the area of the basket and that the castor (103) of the front castor pair (103, 104) on the cash desk side is inwardly offset relative to the outermost lateral boundary of the goods basket by at least the dimension (s).

13. Cash desk station according to Claim 1, characterized in that the end face (20) of the cash desk (1) at the discharge end extends obliquely at an angle (β) of approximately 100° to 115° relative to its longitudinal side (31).

14. Cash desk station according to Claim 1, characterized in that the conveyor table (3) is provided, at its discharge end, with an outwardly projecting plate (30) and that the two lateral parts (27, 28) of the goods basket (5) are set back relative to the transverse edge (13) by the projection dimension of this plate (30).

15. Cash desk station according to Claim 1, characterized in that, at the lower end of the chute bottom (11) at the inner face opposite the transverse edge (13), a cushion strip (32) of soft material is disposed.

16. Cash desk station according to Claim 1, characterized in that the chute bottom (11) of the goods basket (51) is provided with one or more slide metal strips (52).

## Revendications

1. Poste de travail de caisse avec bac de réception roulant, en particulier pour des magasins en libre-service, des grands magasins, des hypermarchés et analogues, comprenant une table de caisse (1) avec une voie de transport conduisant à un poste d'enregistrement et composée d'une plaque de transport et/ou une bande transporteuse (2), et un panier roulant (5) qui présente la forme générale d'un trapèze isocèle et un fond de glissement (11) incliné par rapport à l'horizontale dont le bord transversal (13) se termine au niveau de la bande transporteuse (2, 3) et dont le châssis (9) également de forme trapézoïdale est équipé d'une paire de roulettes directrices avant et d'une paire de roulettes directrices arrière, la paire de roulettes directrices avant (103, 104) présentant un écartement plus petit que la paire de roulettes directrices arrière (101, 102) et le panier roulant (5) pouvant être déplacé sur une voie de roulement conduisant le long du côté longitudinal de la table de caisse vers le côté sortie de marchandises de ladite table de caisse où il peut être positionné frontalement pour la réception des marchandises et où il est maintenu par des moyens de retenue pour empêcher l'éloignement, **caractérisé en ce** que le panier roulant (5) comporte au-dessous du bord transversal supérieur (13) de son fond de glissement (11) qui se termine au niveau de la bande transporteuse (2, 3), des éléments de guidage (16, 17) en forme de tourillons ou de crochets qui peuvent être introduits à engagement positif et de façon mobile dans le sens transversal dans une glissière (18) qui s'étend transversalement et horizontalement sur la face frontale (20) de la table de caisse (1) du côté sortie des marchandises.

2. Poste de travail de caisse selon la revendication 1, caractérisé en ce que le panier roulant (5) présente du côté du bord transversal supérieur (13) de son fond de glissement (11), sa largeur plus faible et qu'il est muni uniquement de ce côté d'une ou de plusieurs poignées.

3. Poste de travail de caisse selon l'une des revendications 1 ou 2, caractérisé en ce que les éléments de guidage (16, 17) du panier roulant (5) sont constitués par deux tourillons verticaux munis de galets ou de douilles de guidage, et que la glissière (18) est constituée par un rail de guidage profilé en Z ou en U qui est monté sur la face frontale (20) de la table de caisse (1) au niveau des éléments de guidage (16, 17).

4. Poste de travail de caisse selon l'une des revendications 1 ou 3, caractérisé en ce que la glissière (18) est montée sur la face inférieure (34) d'une saillie (33) fixée sur la face frontale (20) de la table de caisse (1), à une distance (a) d'environ 15 cm à 30 cm de la face frontale (20), et que sur le panier roulant (51), aussi bien les éléments de guidage (16, 17) que les roulettes directrices arrière (101, 102) situées immédiatement au-dessous desdits éléments de guidage sont décalés de cette distance (a) vers l'avant, dans la direction de poussage (flèche 35), par rapport au bord transversal supérieur (13) du fond de glissement (11).

5. Poste de travail de caisse selon l'une des revendications 1 à 4, caractérisé en ce que la longueur (f) de la glissière (18) est au moins aussi grande que la distance (f1) entre les deux éléments de guidage (16, 17).

6. Poste de travail de caisse selon la revendication 5, caractérisé en ce que la glissière (18) comporte du côté sortie un dispositif d'encliquetage (19) commandé par ressort ou un dispositif d'arrêt amovible pour le positionnement du panier roulant (5).

7. Poste de travail de caisse selon l'une des revendications 1 à 6, caractérisé en ce que le châssis (9) du panier roulant (5) présente du côté plus étroit du panier roulant (5) muni des éléments de guidage (16, 17), une largeur (f1) qui correspond au moins à la largeur maximale (b1) du panier roulant (5) sur le côté oppose.

8. Poste de travail de caisse selon l'une des revendications 1 à 7, caractérisé en ce que les roulettes directrices (101, 102) de la paire de roulettes directrices arrière (101, 102) sont décalées l'une par rapport à l'autre dans la direction de poussage (flèche 35) de telle façon que la roulette directrice gauche (101) d'un panier roulant (5) ne peut, lors d'un déplacement transversal, entrer en contact avec la roulette directrice droite (10) d'un panier roulant (5') placé immédiatement, dans l'alignement, à côté du premier panier roulant.

9. Poste de travail de caisse selon l'une des revendications 1 à 8, caractérisé en ce que la largeur de la voie de roulement (22) qui s'étend le long de la table de caisse (1) est limitée soit par une seconde table de caisse (1), soit par une délimitation (23) en forme de rampe à une cote (b) qui est légèrement supérieure à la largeur maximale (b1) du panier roulant.

10. Poste de travail de caisse selon la revendication 9, caractérisé en ce que la délimitation (23) en forme de rampe de la voie de roulement (22) est plus longue de plus d'une longueur (l) du panier roulant que la table de caisse (1) et comporte à l'extrémité une barre transversale (24) qui empêche le passage du panier roulant (5).

11. Poste de travail de caisse selon l'une des revendications 8 à 10, caractérisé en ce que dans le coin (40) de la table de caisse (1) formé par le côté longitudinal (31) côté voie de roulement et par la face frontale (20) côté sortie, est installé, sur le plancher (41) de la voie de roulement, un rail de guidage (42) en équerre avec deux branches de guidage (43, 44) qui passe autour dudit coin (40); que la roulette directrice (101) de la paire de roulettes directrices arrière (101, 102) avec l'écartement plus grand (w1) qui, lors du passage par la voie de roulement (22), se trouve du côté de la table de caisse, est décalée vers l'arrière d'au moins l'épaisseur de la branche de guidage (44) s'étendant le long de la face frontale (20), par rapport à l'autre roulette directrice (102) de cette paire de roulettes directrices (101, 102), et que la roulette directrice (103) de la paire de roulettes directrices avant (103, 104) située du côté de la table de caisse est décalée vers l'intérieur par rapport à la roulette directrice (101), décalée vers l'arrière, de la paire de roulettes directrices arrière, d'une cote (s) qui est supérieure à la distance latérale (s1) entre la branche de guidage (43) et le côté longitudinal (31) de la table de caisse (1).

12. Poste de travail de caisse selon la revendication 11, caractérisé en ce qu'au moins la roulette directrice (101), décalée vers l'arrière, de la paire de roulettes directrices arrière (101, 102) se situe à l'extérieur de la surface du panier roulant, et que la roulette directrice (103) côté table de caisse de la paire de roulettes directrices avant (103, 104), est décalée vers l'intérieur d'au moins la cote (s) par rapport à la délimitation latérale extérieure du panier roulant.

13. Poste de travail de caisse selon la revendication 1, caractérisé en ce que la face frontale (20) côté sortie de la table de caisse (1) s'étend en oblique par rapport au côté longitudinal (31) de celle-ci, sous un angle (β) d'environ 100° à 115°.

14. Poste de travail de caisse selon la revendication 1, caractérisé en ce que le plateau de transport (3) est muni, sur sa face frontale côté sortie, d'une plaque (30) dépassant vers l'extérieur, et que les deux éléments latéraux (27, 28) du panier roulant (5) se terminent en retrait par rapport au bord transversal (13) de la quantité en saillie de ladite plaque (30).

15. Poste de travail de caisse selon la revendication 1, caractérisé en ce qu'à l'extrémité inférieure du fond de glissement (11), sur la face intérieure opposée au bord transversal (13), est disposée une baguette rembourrée (32) constituée d'un matériau tendre.

16. Poste de travail de caisse selon la revendication 1, caractérisé en ce que le fond de glissement (11) du panier roulant (51) est muni d'une ou de plusieurs bandes de tôle de glissement (52).
